# EUROPEAN PATENT SPECIFICATION

(11) **EP 2 397 445 B1**
(45) Date of publication and mention of the grant of the patent: **07.08.2013**
(21) Application number: 10166648.5
(22) Date of filing: 21.06.2010
(51) Int. Cl.: C02F 1/68, D04H 1/64, E02B 15/04

(54) **Nonwoven**
Vlies
Non-tissé

(43) Date of publication of application: 21.12.2011
(73) Proprietor: TWE Vliesstoffwerke GmbH & Co. KG, 48282 Emsdetten (DE)
(72) Inventor: Height, Murray John, 8006 Zürich (CH); Hentz, Lothar, 48720 Rosendahl (DE); Fößel, Matthias, 79104 Freiburg (DE); Wenning, Martin, 48282 Emsdetten (DE)
(74) Representative: Patentanwälte Freischem

(56) References cited:
- GB-A- 1 349 626
- GB-A- 2 062 713
- GB-A- 2 342 662
- US-A- 4 356 229
- US-A- 5 156 743
- US-A1- 2008 176 022

## Description

The invention relates to an impregnated nonwoven comprising at least an oleophilic impregnating composition and a thermoplastic nonwoven.

Currently there are several materials available to imbibe oil.

Thermoplastic nonwoven is already used to imbibe oil. However, these state of the art thermoplastic nonwoven often also have a high water uptake and therefore are not very efficient to extract oil from water. Furthermore, state of the art nonwovens are designed to release the imbibed oil on mechanical pressure (e.g. squeezing), which can be a disadvantage for capturing and holding oil within the fabric structure for prolonged periods.

Nonwoven made of glass fiber treated with silicone compositions are known to imbibe oil. However, this nonwoven type cannot be easily disposed when containing imbibed oil and must therefore often be disposed as toxic waste in a landfill. Also, silicone is known to show limited oleophilicity and sometimes even to repel oil.

Nonwovens made of cotton are known to imbibe oil. Even with hydrophobic treatment this nonwoven type is not very efficient, since the hydrophobic treatment may wear off and cotton fibers are extremely hydrophilic in contrast to thermoplastic fibers.

GB 1 349 626 A describes fibrous oil-absorbent compositions.

GB 2 062 713 A describes non-woven fabric for use in removing oil pollutants.

GB 2 342 662 A describes oil absorbent materials.

The problem is to find a better material capable of being disposed of via stardard thermal processing (e.g. incineration) and to resist water uptake and at the same time to imbibe substances that are liquid at ambient temperatures and are hydrophobic but soluble in organic solvents.

The problem according to the present invention is solved in a first embodiment by an impregnated nonwoven comprising at least
a) 1 to 50 wt.% of an oleophilic impregnating composition, and
b) 50 to 99 wt.% of a thermoplastic nonwoven,
wherein the linear mass density of the fibers of the nonwoven is in a range between 10 and 50 decitex.

Surprisingly, it has been found that this impregnated nonwoven according to the invention can both be incinerated and therefore easily disposed of, and at the same time resist water uptake for a very long time and imbibe substances that are liquid at ambient temperatures and are hydrophobic but soluble in organic solvents, such as oil.

Preferably, the impregnated nonwoven according to the present invention comprises 2 to 15 wt.% oleophilic and/or hydrophobic impregnating composition and 85 to 98 wt.% thermoplastic nonwoven. If the content of the impregnating composition is higher than this range, the pores of the non-woven might be blocked and the uptake of oil might therefore be diminished. If the content of the impregnating composition is lower than this range, the uptake of oil might be only in the range of regular thermoplastic nonwoven.

The total content of oleophilic impregnating composition and thermoplastic nonwoven is preferably at least 95 wt.%.

The impregnating composition comprises at least an oleophilic substance and optionally an emulsifier, preferably at least 95 wt.% of a mixture of the oleophilic substance and the optional emulsifier.

The weight ratio of oleophilic substance to emulsifier preferably is in a range between 300:1 to 450,000:1, preferably between 2000:1 to 10,000:1. If there is too much emulsifier present in the oleophilic composition, the composition might become too thick or viscous and block pores of the nonwoven. If there is too little emulsifier present in the oleophilic composition, the fibers of the nonwoven might not be coated with the composition well enough. It was shown that the composition within the claimed range exhibited an accelerated rate of uptake of hydrophobic substance like oil and a much better absorption capacity compared to prior art solutions. Also, surprisingly the hydrophobicity and oleophilicity did not wear off as quickly as seen in the prior art solutions.

Preferably, the oleophilic substance is selected from silicone, wax, fluoropolymers or mixtures thereof, and preferably has a melting point in a range from 50 to 170 °C, most preferably a melting point in a range from 90 to 120 °C. If the melting point is lower than this, the oleophilic substance might become liquid in hot weather and the nonwoven according to the present invention might loose its efficiency. If the melting point is higher than this, the oleophilic substance might be too brittle to be efficiently coated onto the fibers of the nonwoven.

The silicones may be selected from the group silicone elastomer, silicone elastomer/volatile silicone blends, silicone elastomer/nonvolatile silicone blends, cyclomethicone, dimethicone, amodimethicone polymers, dimethicone copolyols and mixtures thereof.

The wax may be selected from, but not limited to, the group the group consisting of candelilla wax, carnauba wax, Japan wax, espartograss wax, cork wax, guaruma wax, rice oil wax, sugar cane wax, ouricury wax, montan wax, beeswax, shellac wax, spermaceti, lanolin (wool wax), uropygial fat, ceresine, ozocerite (earth wax), petrolatum, paraffin waxes, polyolefin waxes, microwaxes; montan ester waxes, sasol waxes, hydrogenated jojoba waxes, polyalkylene waxes, polyethylene glycol waxes and mixtures thereof.

The fluoropolymers may be selected from one or more of the following: copolymer based on ethylene, TFE and/or CTFE, modified with hydrogenated monomers, or blends of these fluoropolymers with homopolymers of CTFE or (co)polymers based on CTFE (PCTFE) containing at least 99% by moles of CTFE, the complement to 100 being one or more fluorinated monomers or hydrogenated monomers; said fluoropolymers and/or the corresponding blends optionally mixed with hydrogenated plasticizers.

Preferably, the emulsifier is selected from thickeners, polysaccharides, surfactants, emulsifying wax, cetearyl alcohol, polysorbate 20, ceteareth 20 or mixtures thereof.

The surfactant may be selected from the group alkyl monoglycosides, alkyl polyglycosides, sucrose alkylesters, tertiary or quaterny alkylamine alkoxylates, non-alkoxylated tertiary or quaternary alkylamines, alkylamine oxides, alkylbetaines or mixtures thereof.

Preferably, the thermoplastic nonwoven is selected from all synthetic fibers or naturally based fibers, most preferably selected from polyethylene nonwoven, polyester nonwoven, polypropylene nonwoven, or mixtures thereof.

Preferably, the linear mass density of the fibers of the nonwoven is in a range between 15 to 35 decitex. Typical nonwovens have fibers with a linear mass density of about 0.5 to 6 decitex. It has been surprisingly found, that a much higher linear mass density of the fibers yielded in an impregnated nonwoven with much better adherence of the impregnating composition to the fibers compared with typical linear mass densities. Also, the resulting impregnated nonwoven with the higher linear mass density was much sturdier.

Preferably, the average fiber diameter is in a range of from 0.5 to 18 µm.

Preferably, the weight per unit area of the impregnated nonwoven is in a range from 10 to 2000 g/m², most preferably 500 to 1900 g/m².

Preferably, the nonwoven is not coated with a sealant and does not have an air-impermeable layer. In contrast to some solutions proposed in the prior art it has been found that an air-permeable impregnated nonwoven is much better capable of imbibing liquid hydrophobic substances.

Preferably, the permeability to air (measured as disclosed in DIN 53887) is in a range of from 200 to 1500 l/m² at a pressure of 2 mbar.

Preferably, the thermoplastic nonwoven is made of staple fibers, most preferably of staple fibers with a staple length in a range from 5 to 150 mm, most preferably 30 to 100 mm.

Preferably, the thermoplastic nonwoven is carded, wetlaid, spunbonded, meltblown or airlaid.

Preferably, the textile is needle-bonded, spunlaced, thermal bonded, calandered, chemically bonded, stichbonded, woven fabric, skrim, warp knitted, knitted and combinations thereof.

Preferably, the thickness of the impregnated nonwoven is in a range of from 1 to 20 mm, most preferably in a range of from 2 to 8 mm.

Preferably, the width of the impregnated nonwoven is in a range of from 2 to 20 m, most preferably from 5 to 12 m.

Preferably, the length of the impregnated nonwoven is in a range of from 10 to 300 m, most preferably from 90 to 130 m.

The problem according to the present invention is solved in a second embodiment by the use of the nonwoven according to the present invention to imbibe substances that are liquid at ambient temperatures and are hydrophobic but soluble in organic solvents, such as oil.

The use may preferably be directed to imbibing oil extracted from oil springs, spouters or oil in water.

All above mentioned features are explicitly disclosed in all possible combinations, except when stated otherwise or when obviously not feasible.

### Example

A 5 m x 90 m spunlaced PP nonwoven with a staple fiber length of 50 mm, a thickness of 3 mm, a fiber diameter of 2 µm and a fiber weight of 15 decitex is impregnated with an aqueous precursor to the oleophilic composition of the following table by immersion impregnation (remaining wt.% water):

| | oleophilic substance 25 wt.% | Emulsifier 0.005 wt.% |
|---|---|---|
| Example 1 | Silicone oil (LK -SIL 100T by Elkay) | thickener (Carrageen) |
| Example 2 | Paraffin wax of type H1 (melting point about 100 °C) | thickener (Carrageen) |
| Example 3 | Silicone oil (LK -SIL 100T by Elkay) | Non-ionic emulsifier (stearic acid ethanol amide) |
| Example 4 | Paraffin wax of type H1 (melting point about 100 °C) | Non-ionic emulsifier (stearic acid ethanol amide) |
| Example 5 | Silicone oil (LK -SIL 100T by Elkay) | No emulsifier |

The amount of impregnating composition was adjusted so that the dried impregnated nonwoven (water was removed) according to the present invention comprised about 7 wt.% oleophilic composition. Immersion impregnation followed by drying was repeated until the desired content of impregnating composition in the dried impregnated nonwoven was achieved.

All dried impregnated nonwoven specimens (examples 1 to 5) according to the present invention were immersed in a mixture of 10 wt.% rapeseed oil and 90 wt.% saltwater at ambient conditions for 30 h. None of the impregnated nonwoven specimens exhibited any significant water uptake. The weight of all impregnated nonwoven specimens increased at least 3-fold after imbibing the rapeseed oil. It was possible to dispose the impregnated nonwoven afterwards using incineration without problems.

In comparison, abovementioned nonwoven without impregnation did imbibe more water than oil and therefore preformed much worse.

## Claims

1. Impregnated nonwoven comprising at least
a) 1 to 50 wt.% oleophilic impregnating composition, and
b) 50 to 99 wt.% thermoplastic nonwoven,
wherein the linear mass density of the fibers of the nonwoven is in a range between 10 and 50 decitex.

2. Nonwoven according to claim 1, **characterized in that** the impregnating composition comprises at least an oleophilic substance and optionally an emulsifier, preferably at least 95 wt.% of a mixture of the oleophilic substance and the optional emulsifier.

3. Nonwoven according to claim 2, **characterized in that** the weight ratio oleophilic substance to emulsifier is in a range between 300:1 to 450,000:1, preferably between 2000:1 to 10,000:1.

4. Nonwoven according to any of claims 2 or 3, wherein the oleophilic substance is selected from silicone, wax, fluoropolymers or mixtures thereof, and preferably has a melting point in a range from 50 to 170 °C, most preferably a melting point in a range from 90 to 120 °C.

5. Nonwoven according to any of claims 2 to 4, wherein the emulsifier is selected from thickeners, polysaccharides, surfactants, emulsifying wax, cetearyl alcohol, polysorbate 20, ceteareth 20 or mixtures thereof.

6. Nonwoven according to any of claims 1 to 5, wherein the thermoplastic nonwoven is selected from all synthetic fibers or naturally based fibers, most preferably selected from polyethylene nonwoven, polyester nonwoven, polypropylene nonwoven, or mixtures thereof.

7. Nonwoven according to any of claims 1 to 6, wherein the weight per unit area of the impregnated nonwoven is in a range from 10 to 2000 g/m², preferably 500 to 1900 g/m².

8. Nonwoven according to any of claims 1 to 7, wherein the nonwoven is not coated with a sealant and does not have an air-impermeable layer.

9. Nonwoven according to any of claims 1 to 8, wherein the thermoplastic nonwoven is made of staple fibres, preferably of staple fibers with a staple length in a range from 5 to 150 mm.

10. Use of the nonwoven according to any of claims 1 to 9 to imbibe substances that are liquid at ambient temperatures and are hydrophobic but soluble in organic solvents.

## Patentansprüche

1. Imprägniertes Vlies, welches zumindest
a) 1 bis 50 Gewichtsprozent oleophile Imprägnierzusammensetzung und
b) 50 bis 99 Gewichtsprozent thermoplastisches Vlies umfasst,
wobei die lineare Massendichte der Fasern des Vlieses in einem Bereich zwischen 10 und 50 dtex liegt.

2. Vlies nach Anspruch 1, **dadurch gekennzeichnet, dass** die Imprägnierzusammensetzung mindestens eine oleophile Substanz und optional einen Emulgator, vorzugsweise mindestens 95 Gewichtsprozent einer Mischung aus der oloephilen Substanz und dem optionalen Emulgator, umfasst.

3. Vlies nach Anspruch 2, **dadurch gekennzeichnet, dass** das Gewichtsverhältnis oleophile Substanz zu Emulgator in einem Bereich zwischen 300:1 und 450.000:1, vorzugsweise zwischen 2.000:1 und 10.000:1, liegt.

4. Vlies nach einem beliebigen der Ansprüche 2 oder 3, wobei die oleophile Substanz aus der aus Silikon, Wachs, Fluorpolymeren oder Mischungen davon bestehenden Gruppe ausgewählt wird und vorzugsweise einen Schmelzpunkt in einem Bereich von 50 bis 170°C, besonders bevorzugt einen Schmelzpunkt in einem Bereich von 90 bis 120°C, aufweist.

5. Vlies nach einem beliebigen der Ansprüche 2 bis 4, wobei der Emulgator aus der aus Verdickungsmitteln, Polysacchariden, Tensiden, Emulgierwachs, Cetearylalkohol, Polysorbat 20, Ceteareth 20 oder Mischungen davon bestehenden Gruppe ausgewählt wird.

6. Vlies nach einem beliebigen der Ansprüche 1 bis 5, wobei das thermoplastische Vlies unter allen synthetischen Fasern oder Fasern auf Naturbasis ausgewählt wird, besonders bevorzugt aus der aus Polyethylenvlies, Polyestervlies, Polypropylenvlies oder Mischungen davon bestehenden Gruppe ausgewählt wird.

7. Vlies nach einem beliebigen der Ansprüche 1 bis 6, wobei das Gewicht pro Flächeneinheit des imprägnierten Vlieses in einem Bereich von 10 bis 2.000 g/², vorzugsweise 500 bis 1.900 g/m², liegt.

8. Vlies nach einem beliebigen der Ansprüche 1 bis 7, wobei das Vlies nicht mit einem Abdichtungsmittel beschichtet ist und keine luftundurchlässige Schicht aufweist.

9. Vlies nach einem beliebigen der Ansprüche 1 bis 8, wobei das thermoplastische Vlies aus Stapelfasern hergestellt ist, vorzugsweise aus Stapelfasern mit einer Stapellänge in einem Bereich von 5 bis 150 mm.

10. Verwendung des Vlieses nach einem beliebigen der Ansprüche 1 bis 9 zum Aufnehmen von Substanzen, welche bei Umgebungstemperatur flüssig sind und hydrophob, aber in organischen Lösungsmitteln löslich sind.

## Revendications

1. Non-tissé imprégné comprenant au moins
a) de 1 à 50 % en poids d'un composé d'imprégnation oléophile, et
b) de 50 à 99 % en poids d'un non-tissé thermoplastique,
dans lequel la densité de masse linéaire des fibres du non-tissé est dans une plage entre 10 et 50 décitex.

2. Non-tissé selon la revendication 1, **caractérisé en ce que** le composé d'imprégnation comprend au moins une substance oléophile et optionnellement un émulsifiant, de préférence au moins 95 % en poids d'un mélange de la substance oléophile et de l'émulsifiant optionnel.

3. Non-tissé selon la revendication 2, **caractérisé en ce que** le rapport de poids substance oléophile sur émulsifiant est dans une plage entre 300:1 et 450.000:1, de préférence entre 2000:1 et 10.000:1.

4. Non-tissé selon l'une quelconque des revendications 2 ou 3, dans lequel la substance oléophile est choisie parmi le silicone, la cire, les fluoropolymères ou mélanges de ceux-ci, et a de préférence un point de fusion dans une plage allant de 50 à 170°C, de manière particulièrement préférée un point de fusion dans une plage allant de 90 à 120°C.

5. Non-tissé selon l'une quelconque des revendications 2 à 4, dans lequel l'émulsifiant est choisi parmi les épaississants, les polysaccharides, les tensioactifs, les cires émulsifiantes, l'alcool cétéarylique, le polysorbate 20, le cétéareth 20 ou des mélanges de ceux-ci.

6. Non-tissé selon l'une quelconque des revendications 1 à 5, dans lequel le non-tissé thermoplastique est choisi parmi toutes les fibres synthétiques ou les fibres à base naturelle, et est choisi de manière particulièrement préférée parmi les non-tissés en polyéthylène, les non-tissés en polyester, les non-tissés en polypropylène, ou des mélanges de ceux-ci.

7. Non-tissé selon l'une quelconque des revendications 1 à 6, dans lequel le poids par unité de surface du non-tissé imprégné est dans une plage allant de 10 à 2000 g/m², de préférence de 500 à 1900 g/m².

8. Non-tissé selon l'une quelconque des revendications 1 à 7, dans lequel le non-tissé n'est pas revêtu d'un mastic et n'a pas de couche imperméable à l'air.

9. Non-tissé selon l'une quelconque des revendications 1 à 8, dans lequel le non-tissé thermoplastique est fait en fibres de base, de préférence en fibres de base ayant une longueur de fibre dans une plage allant de 5 à 150 mm.

10. Utilisation du non-tissé selon l'une quelconque des revendications 1 à 9 pour absorber des substances qui sont liquides à température ambiante et qui sont hydrophobes mais solubles dans des solvants organiques.
